(19) Europäisches Patentamt
European Patent Office
Office européen des brevets

(11) Publication number : **0 352 851 B1**

(12) **EUROPEAN PATENT SPECIFICATION**

(45) Date of publication of patent specification : **07.10.92 Bulletin 92/41**

(51) Int. Cl.[5] : **B01J 37/20,** C10G 47/06

(21) Application number : **89201910.0**

(22) Date of filing : **20.07.89**

(54) **Process for the preparation of a presulphided catalyst; process for the preparation of a sulphided catalyst and use of said catalyst.**

(30) Priority : **29.07.88 NL 8801907**

(43) Date of publication of application : **31.01.90 Bulletin 90/05**

(45) Publication of the grant of the patent : **07.10.92 Bulletin 92/41**

(84) Designated Contracting States : **AT BE DE ES FR GB GR IT NL SE**

(56) References cited :
**EP-A- 0 064 429**
**EP-A- 0 130 850**
**EP-A- 0 153 233**
**EP-A- 0 289 211**
**EP-A- 0 300 629**
**US-A- 3 947 495**
**US-A- 4 048 058**
**US-A- 4 725 571**

(73) Proprietor : **AKZO N.V.**
**Velperweg 76**
**NL-6824 BM Arnhem (NL)**

(72) Inventor : **de Jong, Jan Ide**
**Noolseweg 61**
**NL-1261 EB Blaricum (NL)**
Inventor : **Eisenhuth, Ludwig**
**Lauterhofstrasse 44**
**W-8753 Obernburg (DE)**
Inventor : **Schoonhoven, Johannes Wilhelmus F. M.**
**Oude Singel 188**
**NL-2312 RH Leiden (NL)**
Inventor : **van Hengstum, Antonius Johannes**
**Zebraspoor 372**
**NL-3605 GV Maassen (NL)**

(74) Representative : **Sieders, René et al**
**AKZO N.V. Patent Department (Dept. CO) P.O. Box 9300**
**NL-6800 SB Arnhem (NL)**

EP 0 352 851 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a process for the preparation of a presulphided catalyst, a process for the preparation of a sulphided catalyst, and the use of said sulphided catalyst in the catalytic hydrotreatment of hydrocarbon-containing feeds.

In the oil industry many processes are known in which hydrocarbon-containing feeds are catalytically treated with hydrogen; such as hydrodesulphurization, hydrodenitrogenation, and hydrocracking. In such processes use is made of catalysts built up from a carrier material, such as alumina, on which there are deposited one or more catalytically active metals or compounds thereof; examples of such metals are molybdenum, nickel, cobalt and tungsten.

It is common knowledge that optimum results are obtained in using such catalysts when the catalytically active metals are in their sulphided form. See for instance H. Hallie's article in Oil & Gas Journal, Dec. 20, 1982, Technology, pp. 69-74, which also describes several techniques for preparing sulphided catalysts. These techniques comprise treating a fresh catalyst in a reactor at elevated temperature with a combination of hydrogen sulphide and hydrogen, a naturally sulphurous feed (non-spiked feed), or a feed to which a sulphur compound, such as carbon disulphide or dimethyldisulphide, has been added (spiked feed).

Although these techniques are practised on a large scale, they nevertheless display several drawbacks. For instance, they require accurate control to achieve the desired result and are time-consuming, and the sulphur compounds used cause odour nuisance. Moreover, protracted interruption of the actual hydrotreatment of the hydrocarbons is needed if, as is often the case in actual practice, the reactor in which these processes are carried out is used for sulphiding catalysts.

To meet these drawbacks it is proposed in European Patent Application No. 0 153 233 that the fresh catalyst or a regenerated one should be contacted ex situ, i.e. outside the reactor in which the actual hydrotreatment of hydrocarbon-containing feeds is carried out, with an aqueous solution of diammonium sulphide, and the resulting material be dried to obtain a presulphided catalyst, whereupon the resulting presulphided catalyst is activated in situ or not in the presence of hydrogen, i.e. is brought into the sulphided state.

This proposal also has its drawbacks, however. Firstly, aqueous diammonium sulphide is a reagent which produces an extremely objectionable odour. Secondly, if the total amount of the catalytically active metal is to be brought into the sulphided form, then, according to the teachings of the patent specification, the presulphiding should comprise at least two impregnating steps with the aqueous diammonium sulphide; in this process each impregnating step should be followed by a drying step, and the final drying step should preferably be carried out in an inert atmosphere, such as nitrogen. A disadvantage to such a preparative process is its laboriousness when used in actual industrial practice. Thirdly, it has been found that the drying during the preparation of catalysts according to said patent specification is attended with the release of hydrogen sulphide, causing environmental problems. Finally, it has been found that these catalysts display an objectionably poor activity.

The present invention has for its object to meet the drawbacks to the teachings of EP-A 0 153 233.

It has been found that this object is attained if during presulphiding the fresh or regenerated catalyst is contacted with an aqueous medium containing an organic sulphur compound. In this way catalysts having a relatively high sulphur content can be prepared in a simpler manner than is described in EP-A 0 153 233, and, moreover, they do not cause odour nuisance during their preparation and display a greater activity during the hydrotreatment of hydrocarbon-containing feeds than do those according to the teachings of said patent specification.

Another publication in which ex situ presulphiding is proposed is EP-A 0 130 850. This publication describes the preparation of presulphided catalysts by treating catalysts ex situ with sulphurization agents dissolved in or mixed with organic solvents. The use of organic solvents in a presulphiding process is attended with several disadvantages, making the process unattractive for industrial application.

EP-A 0 289 211 and EP-A 0 300 629 are related art for the designated contracting states: Germany, Great Britain, France, and the Netherlands under Article 54(3) EPC. In each of these applications presulphiding takes place by impregnating the supported catalyst with the following specific sulphur compounds: mercapto-carboxylic acids, divalent mercaptans, aminosubstituted mercaptans or thiocarboxylic acids. These compounds are not claimed for the countries concerned.

The fresh or regenerated catalysts to be presulphided according to the process of the invention are those which are known in the prior art as suited for use in sulphided form in the catalytic hydrotreatment of hydrocarbon-containing feeds, for instance in hydrodesulphurization, hydrodenitrogenation, hydrodemetallization, hydroreforming (which process, in the present context, is also considered a hydrotreatment), hydroisomerization, hydrocracking, hydroalkylation, and hydrodealkylation. Such catalysts commonly contain a carrier material, such as alumina, silica, silica-alumina, or crystalline aluminosilicate, with deposited thereon one or more metals or compounds of metals, such as oxides, the metals being selected from the groups Ib, Vb, VIb, VIIB, and VIII of the Periodic System. Typical examples of these metals are iron, cobalt, nickel, tungsten, molybdenum, chromium, vanadium, copper, palladium, and platinum as well as combinations thereof. Preference is given to molybdenum, tungsten, nickel, cobalt, platinum and palladium and combinations thereof. The metal content of the catalysts generally is 0,1-30% by weight, calculated on the weight of the total catalyst.

In addition, the catalysts may still contain other components, such as phosphorus, halogen, borium, zeolites and clays - including pillared clays.

The shape of the catalysts is dependent on the process in which they are used. Most frequently used are extruded particles (cylindrical, polylobes) and also fluidizable particles.

The sulphur compound to be used should be organic, i.e. having at least one carbon atom in the molecule. The compound should be either water-soluble or water-miscible. Use may with advantage be made of those compounds which permit the preparation of aqueous mediums which at 25°C and per 100 ml contain at least 1, preferably at least 2, and more particularly at least 3 g of homogeneously distributed sulphur, i.e. the compound is fully dissolved or mixed.

As examples of suitable compounds may be mentioned
salts of ethylene bis(dithiocarbamic acid),
salts of 2,5-dimercapto-1,3,4-thiadiazole,
salts of dimethyldithiocarbamic acid,
thiourea,
ammonium thiocyanate,
dimethyl sulphoxide,
3,4-dithia adipic acid and salts thereof, and
2,2′-dithiodiethanol

Also, use may be made of combinations of sulphur compounds.

Preference is given to sulphur compounds with at least two sulphur atoms in the molecule.

It should be noted that when a salt of a sulphur compound is used in the presulphiding process according to the invention, it must not be an alkali metal salt or an earth alkali metal salt. It is common knowledge that alkali metal ions and earth alkali metal ions in catalysts have a negative effect on the catalytic action. Salts that are preferred, also for reasons of economy, are ammonium salts and mono-, di-, tri-, and tetra alkyl ammonium salts. The methyl group is the most suited alkyl group.

Use may be made of conventional impregnation methods for contacting the fresh or regenerated catalyst with the aqueous medium containing the organic sulphur compound, for instance immersion, impregnation by spraying, impregnation by vacuum and soaking.

The length of this treatment may range from several minutes to several hours.

In general the impregnation will be carried out at room temperature. Optionally, however, the operation may also take place at higher temperatures.

The amount of sulphur compound to be used is dependent on the degree of sulphiding desired for the ready-for-use catalyst. Conventional degrees of sulphiding are in the range of 0,5 x stoichiometric to 1,5 x stoichiometric, on which basis it is easy for the skilled man to determine the amount of sulphur compound to be used in the presulphiding process.

After the organic sulphur compound has been incorporated into the catalyst, the resulting material need be dried to remove excess water. To this end use may be made of conventional equipment, such as ovens and belt driers.

Next, the resulting presulphided catalyst should be activated in order to bring the catalyst into the sulphided form. Such activation is carried out by passing hydrogen gas, in combination or not with a hydrocarbon-containing feed, over the presulphided catalyst at a temperature in the range of 100°C to 600°C, preferably in the range of 100°C to 400°C, and a hydrogen pressure in the range of 1 to 300 bars, preferably 5 to 100 bars. This process step may be carried out either ex situ, i.e. in a separate reactor, or in situ, i.e. in the reactor in which the catalyst will be used.

The catalyst thus prepared is suitable to be used in the catalytic hydrotreatment of hydrocarbon-containing feeds. The most significant of these processes are hydrodesulphurization, hydrodenitrogenation, hydrodemetallization, hydroreforming, hydroisomerization, and hydrocracking. The process equipment to be used and the conditions under which the reactions are carried out vary with the process used and have been described in detail in the prior art. See for instance M. De Wind et al., Proceedings of symposium on catalyst performance testing, March 28/29, 1988, pp. 29-42; published by Unilever Research Laboratories, Vlaardingen, The Netherlands.

Very generally, the following reaction conditions apply here: temperatures in the range of 200°C to 550°C, LHSV values in the range of 0,1 to 10 $hours^{-1}$, hydrogen partial pressures in the range of 10 to 300 bars, and hydrogen/hydrocarbon ratios in the range of 50 to 5000 $Nm^3/m^3$.

The invention will be further described in the following examples.

Example 1

Presulphiding

In a rotating impregnator 1 kg of fresh catalyst KF-165® (ex Akzo Chemicals; catalyst composition: 15,4% by weight of $MoO_3$, 4,2% by weight of CoO, alumina; PV ($H_2O$): 0,46 ml/g) was impregnated at room temperature with an aqueous solution prepared by dissolving 0,88 moles of diammonium salt of 2,5-dimercapto-1,3,4-thiadiazole in such an amount of water as to obtain a final volume of 460 ml, use being made of the pore volume saturation technique. Next, the resulting material was dried in an oven for 15 hours at 100°C. The sulphur content of the catalyst thus presulphided and the sulphur content of the catalyst in the sulphided state calculated therefrom are given in Table 1.

Activation and hydrotreatment

75 ml of the resulting catalyst were introduced into a reactor tube. The reactor tube had a diameter of 21 mm and in longitudinal direction it contained a thermocouple tube with a diameter of 6 mm. The length of the catalyst bed was 45 cm. Activation was as follows.
First the reactor was flushed with nitrogen to remove air. Next, hydrogen gas was passed upwardly over the catalyst at a pressure of 60 kg/$cm^2$ and at a rate of 65 l/hour, the temperature being increased from room temperature to 150°C in a period of 1 hour. Subsequently, a light gas oil (LGO), the relevant data on which is provided in Table 2, was admixed in the hydrogen gas stream at a rate of 200 ml/hour and the temperature was incrementally raised to 368°C over a period of 12 hours.
The catalyst thus activated was used in the same reactor for hydrotreating a vacuum gas oil (VGO), the relevant data on which is provided in Table 2. A first treatment was carried out at a temperature of 368°C, a hydrogen partial pressure of 50 bars, a hydrogen to oil ratio of 300 $Nm^3/m^3$, and an LHSV of 2,67 $hours^{-1}$. Subsequently, a treatment was carried out at an LHSV of 1,33 $hours^{-1}$, given otherwise identical conditions. The data obtained was used to determine the relative volume activity (RVA) of the catalyst for desulphurization, the catalyst according to EP-A 0 153 233 described in Example 6 below being used as standard. The value found for the RVA is given in Table 1.

Example 2

The procedures described in Example 1 were repeated, except that presulphiding was carried out using 0,64 moles of diammonium salt of ethylene bis(dithiocarbamic acid). The results are given in Table 1.

Example 3

The procedures described in Example 1 were repeated, except that presulphiding was carried out using 1,32 moles of 3,4-dithia adipic acid. The results are given in Table 1.

Example 4

The procedures described in Example 1 were repeated, except that presulphiding was carried out using 1,27 moles of dimethylammonium salt of dimethyldithiocarbamic acid. The results are given in Table 1.

Example 5

The procedures described in Example 1 were repeated, except that presulphiding was carried out using 1,32 moles of 2,2′-dithiodiethanol. The results are given in Table 1.

Example 6 (comparative example)

A fresh KF-165® catalyst was presulphided using an aqueous solution of diammonium sulphide as described in EP-A 0 153 233, p. 19, l. 12 through p.20, l. 20. After the second drying step in a nitrogen atmosphere the sulphur content of the presulphided comparative catalyst was 7,4% by weight. From it is calculated for the catalyst in the sulphided state a sulphur content of 8,0% by weight, which within the measuring error corresponds to the amount of 8,6g of sulphur per 100 g of catalyst mentioned in the publication.
The presulphided catalyst was then activated and used to hydrotreat VGO in the manner described in Example

1. The activity of this catalyst was arbitrarily rated 100. See Table 1.

The results listed in Table 1 clearly show that the catalysts which were presulphided by the process according to the invention display a desulphurizing activity superior to that of the catalyst according to EP-A 0 153 233.

TABLE 1

| Example | Sulphur content (wt.%) | | RVA |
|---|---|---|---|
| | presulphided | sulphided | |
| 1 | 7,3 | 7,8 | 155 |
| 2 | 7,1 | 7,6 | 152 |
| 3 | 6,8 | 7,8 | 138 |
| 4 | 6,7 | 7,5 | 141 |
| 5 | 7,1 | 7,8 | 152 |
| 6* | 7,4 | 8,0 | 100 |

* Comparative Example

TABLE 2

| Feed | N (wt.ppm) | S (wt.%) | Density 50°C (g/ml) | Boiling point fract.(°C) | | | | |
|---|---|---|---|---|---|---|---|---|
| | | | | 10% | 30% | 50% | 70% | 90% |
| LGO | 92 | 1,17 | 0,8145 | 224 | 262 | 288 | 313 | 349 |
| VGO | 970 | 2,93 | 0,9018 | 391 | 421 | 451 | 486 | 527 |

Example 6

Sulphur retention test

This test provides a simple yet effective method of determining the suitability for use as (pre)sulphiding reagent of sulphur compounds.

The test is carried out as follows.

Use is made of an impregnated KF-165® catalyst subsequently dried at 100°C; see for instance the presulphided catalyst prepared in Example 1. It is heated for 16 hours in an atmosphere of static air, in an oven, at 160°C. Care should be taken that the catalyst material is spread evenly and has a maximum bed height of 1 cm.

Next the composition of the starting material and the product material is determined by chemical analysis, and the sulphur content is calculated on the basis of the total weight excluding i) water that may be present and ii) the constituents other than sulphur originating from the original sulphur compound. From the resulting sulphur contents of the starting material (Ss) and the product material (Sp) can be calculated the sulphur retention (Sr) by the formula

$$Sr = \frac{Sp}{Ss} \times 100\%$$

Table 3 lists the Sr values for the compounds used in the preceding Examples.

TABLE 3

| Example | Sr (%) |
|---|---|
| 1 | 92 |
| 2 | 91 |
| 3 | 98 |
| 4 | 80 |
| 5 | 75 |
| 6* | 51 |

* Comparative Example

As a rule, those sulphur compounds are suited to be used in the presulphiding process according to the invention which in the sulphur retention test have an Sr value of at least 55%, preferably of at least 65%, and more particularly of at least 80%.

Example 7

Presulphiding

In a rotating impregnator 1 kg of a fresh commercial mild-hydrocracking catalyst (catalyst composition: 10,0 wt.% of $MoO_3$, 2,7 wt.% of CoO, silica-alumina support; PV($H_2O$): 0,60 ml/g) was impregnated at room temperature with an aqueous solution prepared by dissolving 0,86 moles of 2,2′-dithiodiethanol in such an amount of water as to obtain a final volume of 600 ml, use being made of the pore volume saturation technique. Next, the resulting material was dried in an oven for 15 hours at 100°C. The sulphur content of the catalyst thus presulphided was 4,8 wt.% and that of the catalyst in the sulphided state calculated therefrom 5,2 wt.%.

Activation and hydrotreatment

100 ml of the resulting catalyst were introduced into the reactor tube, the details of which are described in Example 1. Activation was carried out according to the procedure also described in Example 1.
The catalyst thus activated was used in the same reactor for hydrotreating a vacuum gas oil, the relevant data on which is given in Table 2.
For a first hydrodesulphurization and hydrodenitrogenation treatment the conditions (I) included a temperature of 370°C, a hydrogen partial pressure of 50 bars, a hydrogen to oil ratio of 600 $Nm^3/m^3$ and an LHSV of 1,50 $hours^{-1}$. After a subsequent change for a mild-hydrocracking treatment the conditions (II) included a temperature of 407°C, a hydrogen partial pressure of 50 bars, a hydrogen to oil ratio of 320 $Nm^3/m^3$ and an LHSV of 0,5 $hours^{-1}$.
The data obtained was used to determine the RVA of the catalyst for hydrodesulphurization (HDS), hydrodenitrogenation (HDN) and mild-hydrocracking (MHC), the catalyst according to EP-A-0153233 described in Example 8 below being used as standard. The RVA values are given in Table 4.

Example 8 (comparative example)

A fresh commercial mild-hydrocracking catalyst (the same type as used in Example 7) was presulphided using an aqueous solution of diammonium sulphide as described in EP-A-0153233, p. 19, l. 12 through p.20, l. 20. After the second drying step in a nitrogen atmosphere the sulphur content of the presulphided comparative catalyst was 5,0 wt.%. From it is calculated for the catalyst in the sulphided state a sulphur content of 5,3 wt.%. The presulphided catalyst was then activated and used to hydrotreat VGO in the manner described in Example 7. The RVA values of this catalyst were arbitrarily rated 100. See Table 4.

The results in Table 4 show that the catalyst which was presulphided by the process according to the invention displays activities superior to those of the catalyst according to EP-A-0153233.

TABLE 4

| Example | RVA | | | | |
|---|---|---|---|---|---|
| | Condition 1 | | Condition II | | |
| | HDS | HDN | HDS | HDN | MHC |
| 7 | >200 | 163 | >200 | 120 | 125 |
| 8* | 100 | 100 | 100 | 100 | 100 |

*Comparative Example.

## Claims

### Claims for the following Contracting States : AT, BE, ES, GR, IT, SE

1. A process for the preparation of a presulphided catalyst which following activation is suitable for use in the catalytic hydrotreatment of hydrocarbon-containing feeds, in which process a catalyst containing a carrier material with deposited thereon one or more catalytically active metals or metal compounds is contacted with an aqueous medium containing a sulphur compound and after a sufficient amount of the sulphur compound has been incorporated into the catalyst, the resulting catalyst material is dried, characterized in that the sulphur compound is an organic sulphur compound.

2. A process according to claim 1, characterized in that the organic sulphur compound is selected from the group consisting of
salts of ethylene bis(dithiocarbamic acid),
salts of 2,5-dimercapto-1,3,4-thiadiazole,
salts of dimethyldithiocarbamic acid,
thiourea,
ammonium thiocyanate,
dimethyl sulphoxide,
3,4-dithia adipic acid and salts thereof, and
2,2'-dithiodiethanol.

3. A process according to claim 1 or 2, characterized in that the organic sulphur compound has at least two sulphur atoms in the molecule.

4. A process for the preparation of a sulphided catalyst suitable for use in the catalytic hydrotreatment of hydrocarbon-containing feeds, in which process a presulphided catalyst is contacted at elevated temperature with hydrogen gas, characterized in that the presulphided catalyst is a catalyst obtained according to any one of the processes described in the preceding claims.

5. Use of a catalyst obtained according to the process of claim 4 in the catalytic hydrotreatment of a hydrocarbon-containing feed.

### Claims for the following Contracting States : DE, GB, FR, NL

1. A process for the preparation of a presulphided catalyst which following activation is suitable for use in the catalytic hydrotreatment of hydrocarbon-containing feeds, in which process a catalyst containing a carrier material with deposited thereon one or more catalytically active metals or metal compounds is contacted with an aqueous containing a sulphur compound and after a sufficient amount of the sulphur compound has been incorporated into the catalyst, the resulting catalyst material is dried, characterized in that the sulphur compound is an organic sulphur compound not being
a mercapto-carboxylic acid of the general formula:

$$HS-(CH_2)_n-COOR$$

(wherein n is an integer of 1 to 3; and R denotes hydrogen atom, an alkali metal, an alkaline earth metal, ammonium group, or a linear, branched or naphtene hydrocarbonaceous radical of 1 to 10 carbon atoms);
a bivalent mercaptan represented by the following general formula:

$$HS-R'-SH$$

(wherein R′ is a bivalent hydrocarbonaceous radical);
an amino substituted mercaptan respresented by the following general formula:

$$H_2N-R'-SH$$

(wherein R′ is as defined above);
or a thiocarboxylic acid represented by the following general formula:

$$R''-COSH$$

(wherein R″ is a monovalent hydrocarbonaceous radical).

2. A process according to claim 1, characterized in that the organic sulphur compound is selected from the group consisting of
salts of ethylene bis(dithiocarbamic acid),
salts of 2,5-dimercapto-1,3,4-thiadiazole,
salts of dimethyldithiocarbamic acid,
thiourea,
ammonium thiocyanate,
dimethyl sulphoxide,
3,4-dithia adipic acid and salts thereof, and
2,2′-dithiodiethanol.

3. A process according to claim 1 or 2, characterized in that the organic sulphur compound has at least two sulphur atoms in the molecule.

4. A process for the preparation of a sulphided catalyst suitable for use in the catalytic hydrotreatment of hydrocarbon-containing feeds, in which process a presulphided catalyst is contacted at elevated temperature with hydrogen gas, characterized in that the presulphided catalyst is a catalyst obtained according to any one of the processes described in the preceding claims.

5. Use of a catalyst obtained according to the process of claim 4 in the catalytic hydrotreatment of a hydrocarbon-containing feed.

## Patentansprüche

### Patentansprüche für folgende Vertragsstaaten : AT, BE, ES, GR, IT, SE

1. Verfahren zur Herstellung eines vorsulfidierten Katalysators, der nach dem Aktivieren zur Verwendung für die katalytische Wasserstoffbehandlung von Kohlenwasserstoff enthaltenden Speisungen geeignet ist, bei welchem Verfahren ein Katalysator enthaltend ein Trägermaterial mit einem oder mehreren darauf abgelagerten katalytisch aktiven Metall(en) oder Metallverbindungen kontaktiert wird mit einem wässrigen Medium, das eine Schwefelverbindung enthält, und wobei das resultierende Katalysatormaterial nach Einverleibung eines ausreichenden Anteils der Schwefelverbindung in den Katalysator getrocknet wird, dadurch gekennzeichnet, dass die Schwefelverbindung eine organische Schwefelverbindung ist.

2. Verfahren nach Anspruch 1, dadurch gekennzeichnet,
dass die organische Schwefelverbindung gewählt ist aus der Gruppe bestehend aus:
Salzen von Ethylen-bis(dithiocarbaminsäure),
Salzen von 2,5-Dimercapto-1,3,4-thiadiazol,
Salzen von Dimethyldithiocarbaminsäure,
Thioharnstoff,

Ammoniumthiocyanat,
Dimethylsulfoxid,
3,4-Dithia-adipinsäure und Salzen hiervon, und
2,2-Dithiodiethanol.

3. Verfahren nach Anspruch 1 oder 2, dadurch gekennzeichnet, dass die organische Schwefelverbindung mindestens zwei Schwefelatome im Molekül enthält.

4. Verfahren zur Herstellung eines sulfidierten Katalysators, der sich zur katalytischen Wasserstoffbehandlung von Kohlenwasserstoff enthaltenden Speisungen eignet, bei welchem Verfahren ein vorsulfidierter Katalysator bei erhöhter Temperatur mit Wasserstoffgas kontaktiert wird, dadurch gekennzeichnet, dass der vorsulfidierte Katalysator ein nach einem der in den vorangehenden Ansprüchen beschriebenen Verfahren hergestellter Katalysator ist.

5. Verwendung eines nach dem Verfahren von Anspruch 4 erhaltenen Katalysators für die katalytische Wasserstoffbehandlung einer Kohlenwasserstoff enthaltenden Speisung.

**Patentansprüche für folgende Verstragsstaaten : DE, GB, FR, NL**

1. Verfahren zur Herstellung eines vorsulfidierten Katalysators, der nach dem Aktivieren zur Verwendung für die katalytische Wasserstoffbehandlung von Kohlenwasserstoff enthaltenden Speisungen geeignet ist, bei welchem Verfahren ein Katalysator enthaltend ein Trägermaterial mit einem oder mehreren darauf abgelagerten katalytisch aktiven Metallen oder Metallverbindungen kontaktiert wird mit einem wässrigen Medium, das eine Schwefelverbindung enthält, und wobei das resultierende Katalysatormaterial nach Einverleibung eines ausreichenden Anteils der Schwefelverbindung in den Katalysator getrocknet wird, dadurch gekennzeichnet, dass die Schwefelverbindung eine organische Schwefelverbindung ist, die keine der folgenden verbindungen ist:
eine Mercaptocarbonsäure der allgemeinen Formel:
$$HS\text{-}(CH_2)_n\text{-}COOR$$
(worin n eine ganze Zahl von 1 bis 3 und R ein Wasserstoffatom, ein Alkalimetall, ein Erdalkalimetall, die Ammoniumgruppe oder ein linearer, verzweigter oder napthenischer Kohlenwasserstoffrest mit 1 bis 10 Kohlenstoffatomen ist);
ein zweiwertiges Mercaptan entsprechend der folgenden allgemeinen Formel:
$$HN\text{-}R'\text{-}SH$$
(worin R′ ein zweiwertiger Kohlenwasserstoffrest ist);
ein amino-substituiertes Mercaptan entsprechend der folgenden allgemeinen Formel:
$$H_2N\text{-}R'\text{-}SH$$
(worin R′ wie oben definiert ist);
oder eine Thiocarbonsäure entsprechend der folgenden allgemeinen Formel:
$$R''\text{-}COSH$$
(worin R″ ein einwertiger Kohlenwasserstoffrest ist).

2. Verfahren nach Anspruch 1, dadurch gekennzeichnet,
dass die organische Schwefelverbindung gewählt ist aus der Gruppe bestehend aus:
Salzen von Ethylen-bis(dithiocarbaminsäure),
Salzen von 2,5-Dimercapto-1,3,4-thiadiazol,
Salzen von Dimethyldithiacarbaminsäure,
Thioharnstoff,
Ammoniumthiocyanat,
Dimethylsulfoxid,
3,4-Dithia-adipinsäure und Salzen hiervon, und
2,2-Dithiodiethanol.

3. Verfahren nach Anspruch 1 oder 2, dadurch gekennzeichnet, dass die organische Schwefelverbindung mindestens zwei Schwefelatome im Molekül enthält.

4. Verfahren zur Herstellung eines sulfidierten Katalysators, der sich zur katalytischen Wasserstoffbehandlung von Kohlenwasserstoff enthaltenden Speisungen eignet, bei welchem Verfahren ein vorsulfidierter Katalysator bei erhöhter Temperatur mit Wasserstoffgas kontaktiert wird, dadurch gekennzeichnet, dass

der vorsulfidierte Katalysator ein nach einem der in den vorangehenden Ansprüchen beschriebenen Verfahren hergestellter Katalysator ist.

5. Verwendung eines nach dem Verfahren von Anspruch 4 erhaltenen Katalysators für die katalytische Wasserstoffbehandlung einer Kohlenwasserstoff enthaltenden Speisung.

## Revendications

### Revendications pour les Etats contractants suivants : AT, BE, ES, GR, IT, SE

1. Un procédé de préparation d'un catalyseur présulfuré qui après activation est approprié à une utilisation dans un hydrotraitement catalytique de charges contenant des hydrocarbures, procédé au cours duquel un catalyseur contenant un support sur lequel sont déposés un ou plusieurs métaux ou composés métalliques catalytiquement actifs et mis en contact avec un milieu aqueux contenant un composé sulfuré et après qu'une quantité suffisante du composé sulfuré ait été incorporée dans le catalyseur, le matériau catalytique résultant est séché, caractérisé en ce que le composé sulfuré est un composé sulfuré organique.

2. Un procédé selon la revendication 1, caractérisé en ce que le composé sulfuré organique est choisi dans le groupe consistant en:
   sels d'acide éthylène bis(dithiocarbamique),
   sels de 2,5-dimercapto-1,3,4-thiadiazole,
   sels de l'acide diméthyldithiocarbamique,
   thio-urée,
   thiocyanate d'ammonium,
   diméthylsulfoxyde,
   acide 3,4-dithia-adipique et ses sels, et
   2,2′-dithiodiéthanol.

3. Un procédé selon la revendication 1 ou la revendication 2, caractérisé en ce que le composé sulfuré organique a au moins deux atomes de soufre dans sa molécule.

4. Un procédé pour la préparation d'un catalyseur sulfuré approprié à une utilisation dans un hydrotraitement catalytique de charges contenant des hydrocarbures, procédé au cours duquel un catalyseur présulfuré est mis en contact à température élevée avec de l'hydrogène sous forme gazeuse, caractérisé en ce que le catalyseur présulfuré est un catalyseur obtenu selon l'un quelconque des procédés décrits dans les revendications précédentes.

5. Utilisation d'un catalyseur obtenu selon le procédé de la revendication 4 dans un hydrotraitement catalytique d'une charge contenant un hydrocarbure.

### Revendications pour les Etats contractants suivants : DE, GB, FR, NL

1. Un procédé pour la préparation d'un catalyseur présulfuré qui après activation est approprié pour l'utilisation dans un hydrotraitement catalytique de charges contenant des hydrocarbures, procédé au cours duquel un catalyseur contenant un support sur lequel sont déposés un ou plusieurs métaux ou composés métalliques catalytiquement actifs et mis en contact avec un milieu aqueux contenant le composé sulfuré et après qu'une quantité suffisante du composé sulfuré ait été incorporée dans le catalyseur, le matériau catalytique résultant est séché, caractérisé en ce que le composé sulfuré est un composé sulfuré organique n'étant pas un acide mercaptocarboxylique de formule générale:

$$HS\text{-}(CH_2)_n\text{-}COOR$$

(formule dans laquelle n est un nombre entier de 1 à 3; et R signifie un atome d'hydrogène, un métal alcalin, un métal alcalino-terreux, un groupe ammonium ou un radical hydrocarboné naphtène linéaire ou ramifié de 1 à 10 atomes de carbone);
un mercaptan bivalent représenté par la formule générale suivante:

$$HS\text{-}R'\text{-}SH$$

(dans laquelle R′ est un radical hydrocarboné bivalent);

un mercaptan amino-substitué représenté par la formule générale suivante:

$$H_2N\text{-}R'\text{-}SH$$

(dans laquelle R′ est tel que désigné ci-dessus);
ou un acide thiocarboxylique représenté par la formule générale suivante:

$$R''\text{-}COSH$$

(dans laquelle R″ est un radical-hydrocarboné monovalent).

**2.** Un procédé selon la revendication 1, caractérisé en ce que le composé sulfuré organique est choisi dans le groupe consistant en:

sels de l'acide éthylène bis(dithiocarbamique),
sels de 2,5-dimercapto-1,3,4-thiadiazole,
sels de l'acide diméthyldithiocarbamique,
thio-urée,
thiocyanate d'ammonium,
diméthylsulfoxyde,
acide 3,4-dithia-adipique et ses sels, et
2,2′-dithiodiéthanol.

**3.** Un procédé selon la revendication 1 ou la revendication 2, caractérisé en ce que le composé sulfuré organique présente au moins deux atomes de soufre dans sa molécule.

**4.** Un procédé pour la préparation d'un catalyseur sulfuré approprié à une utilisation dans un hydrotraitement catalytique de charges contenant des hydrocarbures, procédé au cours duquel un catalyseur présulfuré est mis en contact à température élevée avec de l'hydrogène sous forme gazeuse, caractérisé en ce que le catalyseur présulfuré est un catalyseur obtenu selon l'un quelconque des procédés décrits dans les revendications précédentes.

**5.** Utilisation d'un catalyseur obtenu selon le procédé de la revendication 4 dans un hydrotraitement catalytique d'une charge contenant des hydrocarbures.